# EUROPEAN PATENT APPLICATION

(11) **EP 4 645 481 A1**
(43) Date of publication of application: **05.11.2025**
(21) Application number: 23911950.6
(22) Date of filing: 21.12.2023
(51) Int. Cl.: H01M 8/0438, H01M 8/04, H01M 8/12, H01M 8/0612, H01M 8/04537, H01M 8/04746, H01M 8/04858

(54) **FUEL CELL DEVICE AND CONTROL METHOD THEREFOR**

(30) Priority: 28.12.2022 JP 2022212545
(71) Applicant: Kyocera Corporation, Kyoto-shi, Kyoto 612-8501 (JP)
(72) Inventor: KOBAYASHI, Kazuaki, Kyoto-shi, Kyoto 612-8501 (JP)
(74) Representative: TBK
(86) International application number: PCT/JP2023/045994
(87) International publication number: WO 2024/143170

(57) **Abstract**

A fuel cell device includes a reformer, a fuel cell, and a control device. The control device is configured to acquire a first value obtained by detecting the supply rate of each type of feedstock. The control device is configured to calculate a first ratio and a second ratio based on each first value. If at least one of the first ratio or the second ratio is outside a permissible range respectively defined for each ratio, and a difference between a second value and the first value is at or above a threshold, the control device is configured to change a set value for one of two types of feedstocks to the first value and change the set value for the other of the two types of feedstocks.

## Description

### CROSS-REFERENCE TO RELATED APPLICATIONS

This application claims priority based on Japanese Patent Application No. 2022-212545 filed December 28, 2022, the entire disclosure of which is hereby incorporated by reference.

### TECHNICAL FIELD

The present disclosure relates to a fuel cell device and a control method for the same.

### BACKGROUND OF INVENTION

A known fuel cell module includes a reformer that causes a reforming reaction using raw fuel and steam, and a fuel cell that generates electricity using fuel gas reformed in the reformer together with air. The generation of electricity by the above fuel cell module involves pre-calculating a steam-carbon (S/C) ratio and an air-per-fuel (A/F) ratio that are appropriate from the perspective of operational efficiency. Another approach is for the fuel cell module to have a defined set value for the amount of each type of feedstock to be supplied, such as raw fuel, steam, and air, and to carry out control such that feedstocks are supplied to the fuel cell module in accordance with the set values (see Patent Literature 1).

### CITATION LIST

### PATENT LITERATURE

Patent Literature 1: Japanese Unexamined Patent Application Publication No. 2010-212141

### SUMMARY

In a first aspect, a control device is a fuel cell device provided with a reformer, a fuel cell, and a control device. The reformer is configured to generate fuel through reforming using raw fuel and steam. The fuel cell is configured to generate electricity using the fuel and air. The control device is configured to maintain, at set values, supply rates of feedstocks, including the fuel, the air, the raw fuel, and the steam, to be supplied to the reformer and the fuel cell. The control device is configured to acquire a first value obtained by detecting the supply rate of each type of feedstock. The control device is configured to calculate a first ratio and a second ratio based on each first value, the first ratio being the ratio of a number of moles of steam to a number of moles of carbon in the raw fuel, and the second ratio being the ratio of the supply rate of the fuel with respect to the air. If at least one of the first ratio or the second ratio is outside a permissible range respectively defined for each ratio, and a difference between a second value, which is defined as the set value for one of two types of feedstocks used to calculate the at least one ratio, and the first value of the one of the two types of feedstocks is at or above a threshold, the control device is configured to change the set value for the one of the two types of feedstocks to the first value and change the set value for the other of the two types of feedstocks.

In a second aspect, a control method is a method for controlling a fuel cell device provided with a reformer and a fuel cell. The reformer is configured to generate fuel through reforming using raw fuel and steam. The fuel cell is configured to generate electricity using the fuel and air. The fuel cell device is controlled such that supply rates of feedstocks, including the fuel, the air, the raw fuel, and the steam, to be supplied to the reformer and the fuel cell are maintained at set values. The control method includes acquiring a first value obtained by detecting the supply rate of each type of feedstock. The control method includes calculating a first ratio and a second ratio based on each first value, the first ratio being the ratio of a number of moles of steam to a number of moles of carbon in the raw fuel to be supplied to the reformer, and the second ratio being the ratio of the supply rate of the fuel with respect to the air. If at least one of the first ratio or the second ratio is outside a permissible range respectively defined for each ratio, and a difference between a second value, which is defined as the set value for one of two types of feedstocks used to calculate the at least one ratio, and the first value of the one of the two types of feedstocks is at or above a threshold, the control method includes changing the set value for the one of the two types of feedstocks to the first value and changing the set value for the other of the two types of feedstocks.

### BRIEF DESCRIPTION OF THE DRAWINGS

FIG. 1 is a configuration diagram illustrating a schematic configuration of a fuel cell device according to the present embodiment;
FIG. 2 is a flowchart for explaining a first permissible range maintenance process to be executed by the controller in FIG. 1;
FIG. 3 is a flowchart for explaining a second permissible range maintenance process to be executed by the controller in FIG. 1; and
FIG. 4 is a flowchart for explaining a third permissible range maintenance process to be executed by the controller in FIG. 1.

### DESCRIPTION OF EMBODIMENTS

The following refers to the drawings to describe an embodiment of the present disclosure. Of the components illustrated in the drawings below, the same components are denoted with the same signs.

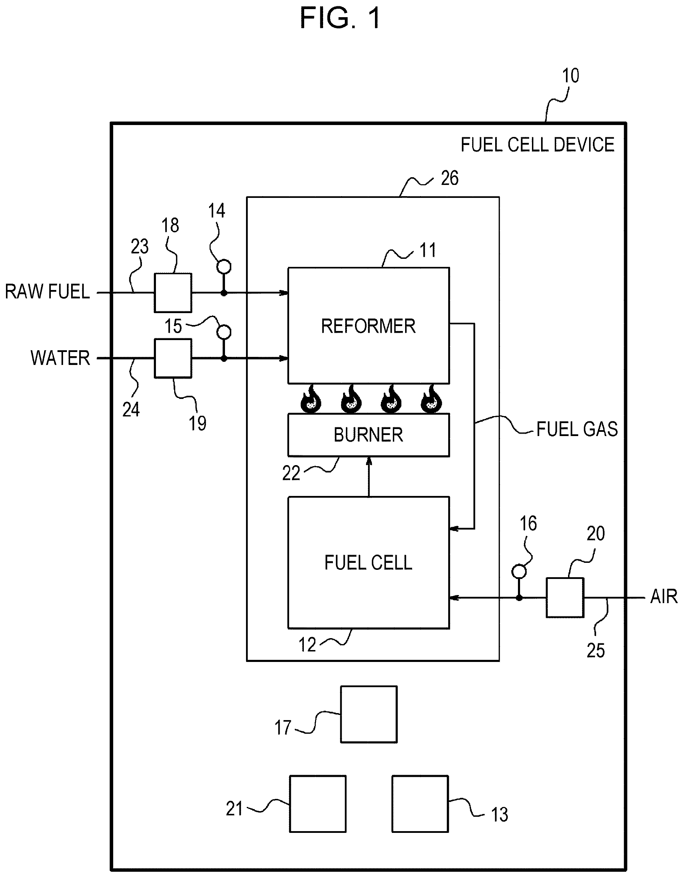

As illustrated in FIG. 1, a fuel cell device 10 according to an embodiment of the present disclosure includes a fuel cell module 26 and a control device 13. The fuel cell device 10 further includes a first flow meter 14, a second flow meter 15, a third flow meter 16, a detection mechanism 17, a first adjustment mechanism 18, a second adjustment mechanism 19, a third adjustment mechanism 20, and storage 21.

The fuel cell module 26 includes a reformer 11 and a fuel cell 12. The fuel cell module 26 may further include a burner 22.

The reformer 11 generates fuel through steam reforming using raw fuel and steam. The raw fuel is a light hydrocarbon such as methane, ethane, propane, or butane. Steam may be supplied to the reformer 11 as reforming water in liquid form and vaporized into steam in a vaporizer provided in the reformer 11. The fuel contains hydrogen, for example. In the description of the present application, the raw fuel and the steam are also referred to as "feedstocks".

The fuel cell 12 may include multiple unit fuel cells. The unit fuel cells may be solid oxide unit fuel cells. The unit fuel cells generate electricity through an electrochemical reaction between the fuel generated by the reformer 11 and an oxidant such as oxygen contained in air. In the description of the present application, the fuel and the air are also referred to as "feedstocks". Unreacted fuel and unreacted oxidant discharged from the unit fuel cells are combusted in the burner 22, thereby providing energy for the steam reforming reaction in the reformer 11. Water discharged from the unit fuel cells may be discharged from the fuel cell 12 as steam along with exhaust gas from the combustion of the unreacted fuel and the unreacted oxidant.

The first flow meter 14 may be provided in a first supply channel 23 that supplies raw fuel to the reformer 11. The first flow meter 14 may detect the supply rate of raw fuel supplied to the reformer 11. The second flow meter 15 may be provided in a second supply channel 24 that supplies water to the reformer 11. The second flow meter 15 may detect the supply rate of reforming water supplied to the reformer 11. The third flow meter 16 may be provided in the third supply channel 25 that supplies air to the fuel cell 12. The third flow meter 16 may detect the supply rate of air supplied to the fuel cell 12. The supply rates detected by the first flow meter 14, the second flow meter 15, and the third flow meter 16 are flow rates, or in other words, quantities supplied per unit time. Instead of the second flow meter 15, the supply rate of reforming water may be detected on the basis of the driving status of a pump that supplies reforming water. Specifically, in a configuration implementing a pump capable of outputting parameters such as discharge rate and rotation speed, the supply rate of reforming water may be detected by computation based on the outputted parameters. In a configuration implementing a pump driven by a pulse motor, the rate of water discharged by the pump may be detected as the supply rate of reforming water by computation based on the duty cycle for driving the pulse motor.

The detection mechanism 17 detects the A/F, that is, the ratio of the supply rate of air to the supply rate of fuel supplied to the fuel cell 12. This detection is based on the supply rate of fuel as detected by the first flow meter 14 and the supply rate of air as detected by the third flow meter 16.

The first adjustment mechanism 18 may make an adjustment so that the supply rate of raw fuel becomes a set value set by the control device 13. The first adjustment mechanism 18 may be a pump with an adjustable duty cycle, for example.

The second adjustment mechanism 19 may make an adjustment so that the supply rate of water becomes a set value set by the control device 13. The second adjustment mechanism 19 may be a pump with an adjustable duty cycle, for example.

The third adjustment mechanism 20 may make an adjustment so that the supply rate of air becomes a set value set by the control device 13. The third adjustment mechanism 20 may be a blower with an adjustable duty cycle, for example.

The storage 21 includes any of semiconductor memory, magnetic memory, and/or optical memory. The semiconductor memory is random access memory (RAM) and/or read-only memory (ROM), for example. The RAM is static random access memory (SRAM) and/or dynamic random access memory (DRAM), for example. The ROM is electrically erasable programmable read-only memory (EEPROM), for example. The storage 21 may function as main memory, auxiliary memory, or cache memory. The storage 21 stores data to be used in operations by the fuel cell device 10 and data obtained through operations by the fuel cell device 10. For example, the storage 21 stores a system program, an application program, embedded software, and/or the like.

The control device 13 includes at least one processor, at least one special-purpose circuit, or a combination thereof. The processor is a general-purpose processor, such as a central processing unit (CPU) or a graphics processing unit (GPU), or a special-purpose processor specialized in specific processing. The special-purpose circuit may be a fieldprogrammable gate array (FPGA) or an application-specific integrated circuit (ASIC), for example.

The control device 13 maintains the supply rates of feedstocks to the reformer 11 and the fuel cell 12 at the set values. More specifically, the control device 13 may determine the set value for the supply rate of each type of feedstock. In the description of the present application, the value to be applied to the set value for the supply rate of each type of feedstock is also referred to as the second value.

The control device 13 provides the determined set values as information to the first adjustment mechanism 18, the second adjustment mechanism 19, and the third adjustment mechanism 20. By providing the set values, the control device 13 causes the first adjustment mechanism 18, the second adjustment mechanism 19, and the third adjustment mechanism 20 to maintain the supply rates of feedstocks to the reformer 11 and the fuel cell 12 at the set values.

Note that since the fuel to be supplied to the fuel cell 12 is generated in the reformer 11, the supply rate of fuel to the fuel cell 12 is adjusted indirectly by adjusting the supply rate of raw fuel to the reformer 11. Consequently, the supply rate of fuel to the fuel cell 12 depends on the supply rate of raw fuel to the reformer 11, and the second value for the fuel depends on the second value for the raw fuel.

The control device 13 may use a designated algorithm to determine the set value for the supply rate of each type of feedstock. For example, the control device 13 may use an algorithm to determine the supply rates of raw fuel and steam to the reformer 11 such that a first ratio in the reformer 11 matches a set value. The first ratio is S/C, which is the ratio of the number of moles of steam to the number of moles of carbon in the raw fuel supplied to the reformer 11. As another example, the control device 13 may use an algorithm to determine the supply rates of fuel and air to the fuel cell 12 such that a second ratio in the fuel cell 12 matches a set value. The second ratio is A/F, which is the ratio of the supply rate of air to the supply rate of fuel supplied to the fuel cell 12.

The control device 13 may determine the supply rate of one of either raw fuel or steam, and then determine the supply rate of the other on the basis of S/C.

Note that since S/C is a molar ratio, the control device 13 may acquire the average molecular weight and the density of the raw fuel to determine the supply rates (flow rates) of raw fuel and steam based on S/C. The control device 13 may acquire the average molecular weight calculated on the basis of a component analysis result obtained in advance in regard to raw fuel gas. Alternatively, the control device 13 may acquire the component analysis result from a gas detection device that performs component analysis on supplied raw fuel, and acquire the average molecular weight on the basis of the component analysis result. The control device 13 may acquire, as information, a density from a density sensor that detects the density of supplied raw fuel. The control device 13 may store in advance the components and the densities of raw fuels that could be used, and call the stored information from storage according to the type of raw fuel set at the time of installation.

The control device 13 may calculate the relation of the supply rate of steam to the supply rate of raw fuel on the basis of the average molecular weight and the density of the raw fuel along with the known molecular weight of water. The control device 13 may use the relation to determine a set value for the supply rates of raw fuel and steam. As described above, since the steam is supplied to the reformer 11 in the form of water, the control device 13, the control device 13 may determine a set value for the flow rate of water instead of the flow rate of steam.

The control device 13 may determine the supply rate of one of either fuel or air, and then determine the supply rate of the other on the basis of A/F.

The power output of the fuel cell 12 may be adjustable. The control device 13 may determine a set value for each type of feedstock so as to be a value in a prescribed correspondence relation with a set value for the power output according to a power demand from the user. The set value for the power output may fluctuate in response to the power demand. To determine the set value for each type of feedstock in accordance with the set value for the power output, a correspondence table or a relational expression representing the prescribed correspondence relation between the set value for the power output and the supply rate of each type of feedstock may be stored in the storage 21. The supply rate of each type of feedstock may exist in a proportional relation with the set value for the power output.

The ratios S/C and A/F, which are calculated using the supply rate of each type of feedstock associated with the set value for the power output, may match the set values for S/C and A/F described above.

The control device 13 acquires a first value obtained by detecting the supply rate of each type of feedstock. The first value does not mean the same value for all types of feedstocks, but may be different depending on each type of feedstock. Specifically, the control device 13 acquires the supply rate detected by the first flow meter 14 as the first value of the raw fuel. The control device 13 acquires the supply rate detected by the second flow meter 15 as the first value of the water. The control device 13 acquires the supply rate detected by the third flow meter 16 as the first value of the air.

The control device 13 calculates the first ratio and the second ratio on the basis of the first value of each type of feedstock. The control device 13 determines whether the first ratio is outside a permissible range defined for the first ratio. The control device 13 determines whether the second ratio is outside a permissible range defined for the second ratio.

The permissible range of the first ratio may be defined from a variety of perspectives. A first ratio that is too high or too low results in an increased possibility of generating carbon monoxide, as described below. Therefore, the permissible range of the first ratio is determined to be, for example, a range whereby the amount of carbon monoxide generated by combustion in the burner 22 can be kept to a permissible amount.

If the first ratio is too low, temperature of the reformer 11 rises because less heat is absorbed in the vaporization of the water. If the supply rate of water is increased while the reformer 11 is at a high temperature, the possibility of violent boiling occurring in the reformer 11 increases. This means that the amount of fuel generated in the reformer 11 may fluctuate, and as a result, the second ratio may also fluctuate. Fluctuations in the second ratio increase the possibility of the second ratio being outside the permissible range, resulting in an increased possibility of generating carbon monoxide by combustion in the burner 22, as described later.

On the other hand, if the first ratio is too high, fuel generated in the reformer 11 and unreacted in the fuel cell 12 does not undergo diffuse combustion as readily in the burner 22. As a result, incomplete combustion occurs in the burner 22, resulting in an increased possibility of generating carbon monoxide. Since a first ratio that is too high means a greater amount of steam, the specific heat increases for the overall gas mixture of unreacted fuel and oxidant sent to the burner 22 together with unreacted steam in the reformer 11. A higher specific heat entails a decrease in the temperature of the gas mixture, and this also results in an increased possibility of incomplete combustion.

The permissible range of the second ratio may be defined from a variety of perspectives. A second ratio that is too high or too low results in an increased possibility of generating carbon monoxide, as described below. Therefore, the permissible range of the second ratio is determined to be, for example, a range whereby the amount of carbon monoxide generated by combustion in the burner 22 can be kept to a permissible amount.

The combustible gas and oxidant to be used for combustion in the burner 22 are the fuel and the air that were unreacted in the fuel cell 12. Consequently, a first ratio that is too high results in an increased possibility that the combustible gas in the burner 22 will be insufficient compared to the oxidant. This results in an increased possibility of accidental fire in the burner 22, thus resulting in an increased possibility of generating carbon monoxide.

On the other hand, a first ratio that is too low results in an increased possibility that the combustible gas in the burner 22 will be excessive compared to the oxidant. This results in an increased possibility of generating carbon monoxide in the burner 22, and an increased possibility of generating carbon monoxide due to incomplete combustion.

If the first ratio, the second ratio, or both are outside the permissible range respectively defined for each, the control device 13 selects a ratio that is outside the permissible range. The control device 13 takes the second value defined as the set value for each of the two types of feedstocks used to calculate the selected ratio, and determines whether the difference between the second value and the first value of each of the two types of feedstocks is at or above a threshold. The two types of feedstocks are steam and raw fuel in the case of the first ratio. The two types of feedstocks are air and fuel in the case of the second ratio.

The control device 13 takes one type of feedstock for which the difference between the first value and the second value is at or above the threshold, and changes the set value for that type of feedstock to the first value. The control device 13 may also change the set value for the other type of feedstock. The threshold for any given type of feedstock is, for example, the error of adjustment by the first adjustment mechanism 18, the second adjustment mechanism 19, or the third adjustment mechanism 20. In general, the threshold is narrower than the permissible range, and if one of either the first ratio or the second ratio is outside the permissible range, the difference between the first value and the second value of at least one of the two types of feedstocks used to calculate that ratio is at or above the threshold.

If the difference between the first value and the second value is at or above the threshold and the first value is less than the second value, the control device 13 may change, to the first value, the set value for the type of feedstock corresponding to the first value. For example, if the first ratio is outside the permissible range and the difference obtained by subtracting the first value from the second value of the raw fuel is at or above the threshold, the control device 13 changes the set value for the raw fuel to the first value. On the other hand, if the first ratio is outside the permissible range and the difference obtained by subtracting the second value from the first value of the raw fuel is at or above the threshold, the control device 13 maintains the set value for the raw fuel at the second value.

After changing the set value for one type of feedstock to the first value, the control device 13 may change the set value for the other type of feedstock to a value based on that first value and the set value set for the selected ratio (first ratio or second ratio). The set value may be defined as any value included within the permissible range described above.

For example, if the first ratio is outside the permissible range and the set value for the raw fuel is changed to the first value, the control device 13 calculates the number of moles of carbon in the raw fuel that corresponds to the first value. The control device 13 calculates the number of moles of steam to be supplied to the reformer 11 by multiplying the set value set for the first ratio by the number of moles of carbon in the raw fuel that corresponds to the first value. The control device 13 calculates a converted value expressing the calculated number of moles of steam as a supply rate of steam. The control device 13 changes the set value for the steam to the converted value.

In a configuration for determining the set value for each type of feedstock according to a set value for the power output according to a power demand from the user, the control device 13 may change the set value for one type of feedstock satisfying the condition described above to the first value, and then change the set value for the power output. Specifically, the control device 13 may multiply a third value defined as the set value for the power output by a coefficient to calculate a fourth value. The coefficient is obtained by dividing the first value of the one type of feedstock by the second value. The control device 13 may change the set value for the power output from the third value to the fourth value. The control device 13 may change the set values for other types of feedstocks, including the other type of feedstock paired with the one type of feedstock, to values determined according to the prescribed correspondence relation described above and the fourth value. Consequently, the control device 13 causes the ratios S/C and A/F, which are calculated using the supply rate of each type of feedstock determined according to the set value for the power output, to match the set values for S/C and A/F.

After changing the set value for the power output to the fourth value, the control device 13 may acquire a new first value obtained by detecting the supply rate of each type of feedstock. The control device 13 may calculate the difference between the new first value of each type of feedstock and the value that is defined as the set value for each type of feedstock, or in other words, the first value when the set value for the power output is the third value. If the difference is at or above a threshold, the control device 13 may stop the fuel cell device 10.

After a prescribed time elapses from the change of the set value for the power output to the fourth value, the control device 13 may revert the set value back to the third value. After reverting the set value for the power output back to the third value, the control device 13 may acquire a first value obtained by detecting the supply rate of each type of feedstock. The control device 13 may calculate the first ratio and the second ratio on the basis of the first value.

If the calculated first ratio, second ratio, or both are outside the permissible range, the control device 13 may stipulate the third value as an upper limit on the power output. In subsequent operation of the fuel cell device 10, the control device 13 may change the power output to be at or below the upper limit.

Alternatively, if the calculated first ratio, second ratio, or both are outside the permissible range, the control device 13 may stop the fuel cell device 10. The control device 13 may stop the fuel cell device 10 after having performed the steps of changing the set value for the power output to the fourth value, changing back to the third value after a prescribed time elapses, and determining whether the first ratio, the second ratio, or both are outside the permissible range at least one more time before stopping the fuel cell device 10.

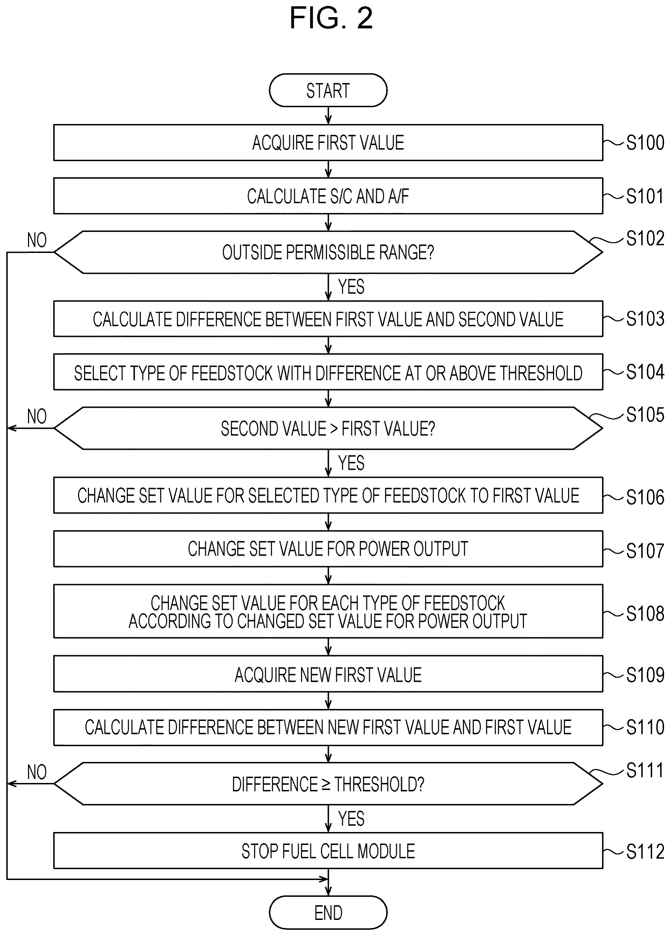

The following uses the flowchart in FIG. 2 to describe a first permissible range maintenance process to be executed by the control device 13 in the present embodiment. The first permissible range maintenance process is started periodically or cyclically, for example.

In step S100, the control device 13 acquires the supply rate of each of the raw fuel, the water, and the air as the first value from the first flow meter 14, the second flow meter 15, and the third flow meter 16, respectively. After acquisition, the process proceeds to step S101.

In step S101, the control device 13 calculates S/C and A/F on the basis of the first value of each type of feedstock acquired in step S100. After calculation, the process proceeds to step S102.

In step S102, the control device 13 determines whether S/C, A/F, or both calculated in step S101 are outside the permissible range respectively defined for each of S/C and A/F. If neither ratio is outside the permissible range, the first permissible range maintenance process ends. If at least one ratio is outside the permissible range, the process proceeds to step S103.

In step S103, the control device 13 calculates the difference between the second value defined as the set value for each type of feedstock and the first value acquired in step S100. After calculation, the process proceeds to step S104.

In step S104, the control device 13 selects one type of feedstock for which the difference calculated in step S103 is at or above a threshold. After selection, the process proceeds to step S105.

In step S105, the control device 13 determines whether the second value of the type of feedstock selected in step S 104 is greater than the first value. If the second value is not greater than the first value, the first permissible range maintenance process ends. If the second value is greater than the first value, the process proceeds to step S106.

In step S106, the control device 13 changes the set value for the type of feedstock selected in step S104 to the first value acquired in step S100. After changing, the process proceeds to step S107.

In step S107, the control device 13 changes the set value for the power output on the basis of the first and second values of the type of feedstock selected in step S104. After changing, the process proceeds to step S108.

In step S108, the control device 13 changes the set value for each type of feedstock other than the type of feedstock selected in step S104 according to the set value for the power output changed in step S107. After changing, the process proceeds to step S109.

In step S109, the control device 13 reacquires the supply rate of each of the raw fuel, the water, and the air as the first value from the first flow meter 14, the second flow meter 15, and the third flow meter 16, respectively. After acquisition, the process proceeds to step S110.

In step S110, the control device 13 calculates the difference between the new first value acquired in step S109 and the first value acquired in step S100. After calculation, the process proceeds to step S111.

In step S111, the control device 13 determines whether the difference calculated in step S110 is at or above a threshold. If the difference is not at or above the threshold, the first permissible range maintenance process ends. If the difference is at or above the first threshold, the process proceeds to step S112.

In step S112, the control device 13 stops the fuel cell device 10. After stopping, the first permissible range maintenance process ends.

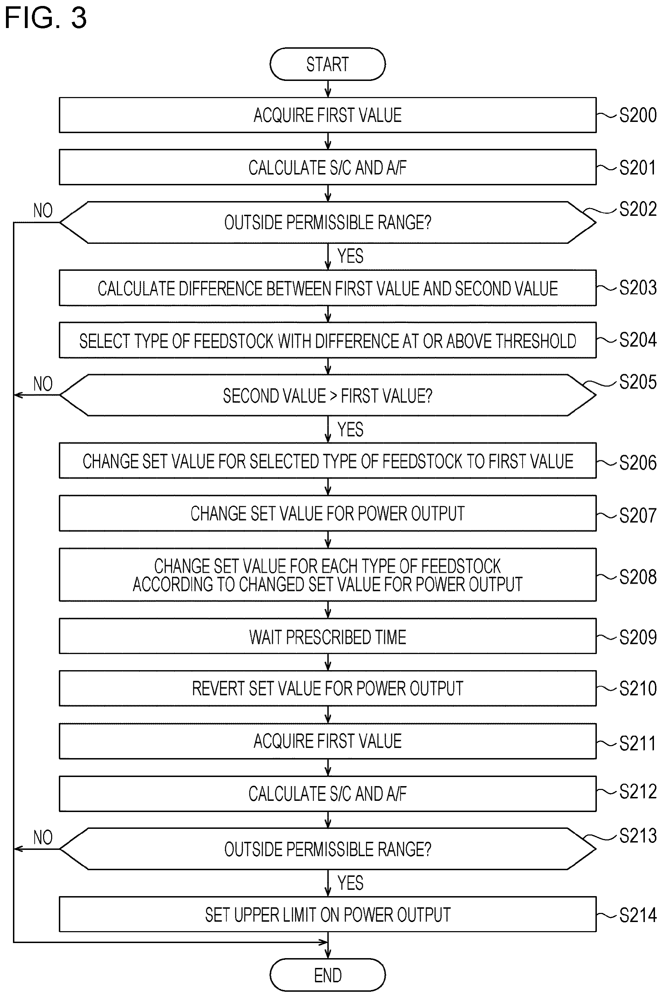

The following uses the flowchart in FIG. 3 to describe a second permissible range maintenance process to be executed by the control device 13 in the present embodiment. The second permissible range maintenance process is started periodically or cyclically, for example.

From step S200 to step S208, the control device 13 executes the same processing as from step S100 to step S108 of the first permissible range maintenance process. In step S208, after changing the set value for each type of feedstock, the process proceeds to step S209.

In step S209, the control device 13 waits a prescribed time. After waiting the prescribed time, the process proceeds to step S210.

In step S210, the control device 13 reverts the set value for the power output back to the fourth value. After reverting the set value, the process proceeds to step S211.

In step S211, the control device 13 reacquires the supply rate of each of the raw fuel, the water, and the air as the first value from the first flow meter 14, the second flow meter 15, and the third flow meter 16, respectively. After acquisition, the process proceeds to step S212.

In step S212, the control device 13 calculates S/C and A/F on the basis of the first value of each type of feedstock acquired in step S211. After calculation, the process proceeds to step S213.

In step S213, the control device 13 determines whether S/C, A/F, or both calculated in step S212 are outside the permissible range respectively defined for each of S/C and A/F. If neither ratio is outside the permissible range, the second permissible range maintenance process ends. If at least one ratio is outside the permissible range, the process proceeds to step S214.

In step S214, the control device 13 sets the set value for the power output to the third value. After setting, the second permissible range maintenance process ends.

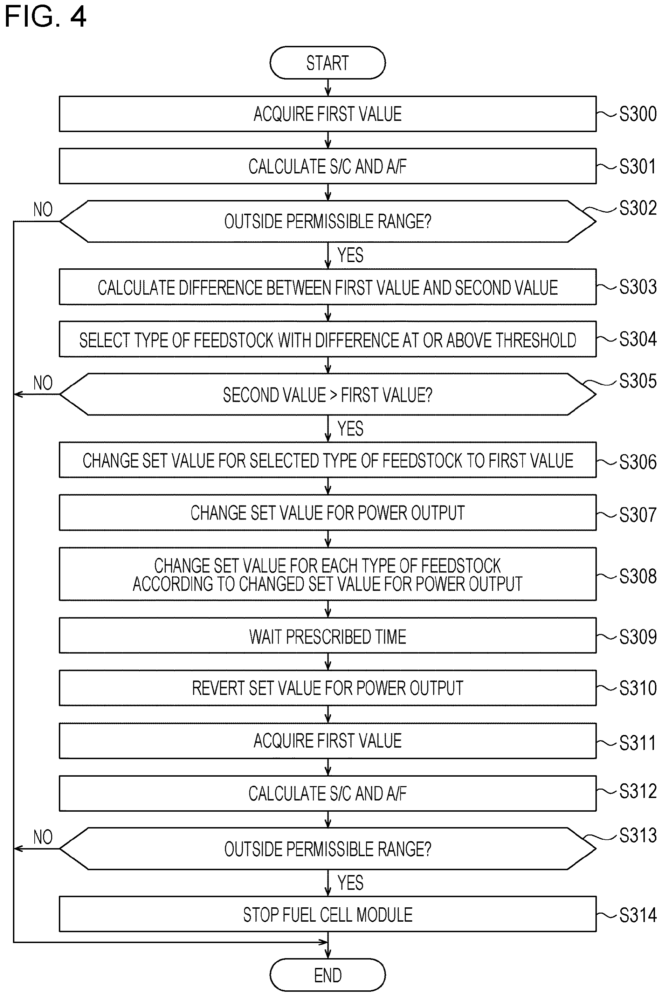

The following uses the flowchart in FIG. 4 to describe a third permissible range maintenance process to be executed by the control device 13 in the present embodiment. The third permissible range maintenance process is started periodically or cyclically, for example.

From step S300 to step S313, the control device 13 executes the same processing as from step S200 to step S213 of the second permissible range maintenance process. In step S313, if S/C, A/F, or both are outside the permissible range respectively defined for each of S/C and A/F, the process proceeds to step S314.

In step S314, the control device 13 stops the fuel cell device 10. After stopping, the third permissible range maintenance process ends.

According to the present embodiment, the fuel cell device 10 configured as above includes the reformer 11, the fuel cell 12, and the control device 13. The reformer 11 is configured to generate fuel through reforming using raw fuel and steam. The fuel cell 12 is configured to generate electricity using the fuel and air. The control device 13 is configured to maintain, at set values, supply rates of feedstocks, including the fuel, the air, the raw fuel, and the steam, to be supplied to the reformer 11 and the fuel cell 12. The control device 13 is configured to acquire a first value obtained by detecting the supply rate of each type of feedstock. The control device 13 is configured to calculate a first ratio and a second ratio on the basis of each first value. If at least one of the first ratio or the second ratio is outside a permissible range respectively defined for each ratio, and the difference between a second value, which is defined as the set value for one of two types of feedstocks used to calculate the at least one ratio, and the first value of the one of the two types of feedstocks is at or above a threshold, the control device 13 is configured to change the set value for the one of the two types of feedstocks to the first value and change the set value for the other of the two types of feedstocks. As described above, if S/C and/or A/F is outside the permissible range, an increased amount of carbon monoxide is generated. Generated carbon monoxide may be combusted using a combustion catalyst, but reducing the amount generated in the first place is desirable. Under normal conditions, set values are defined for the supply rates of the raw fuel, the water, and the air so as to keep the first and second ratios, namely S/C and A/F, within permissible ranges, and control is applied to maintain this state. However, disorder or the like in the first adjustment mechanism 18, the second adjustment mechanism 19, and/or the third adjustment mechanism 20 may lead to difficulty in adjusting the set value for one of either the water or the raw fuel, or one of either the fuel or the air. Such a situation may lead to difficulty in keeping S/C and A/F within the permissible ranges even if normal control continues to be applied. On the other hand, the fuel cell device 10 configured as above may determine that the difference between the detected first value and the second value set as the set value is at or above the threshold. Thus, if the supply rate of a type of feedstock is difficult to maintain at the set value, the fuel cell device 10 may change the set value for that type of feedstock to a maintainable value. The control device 13 may also change the set value for other type of feedstock that is paired with the above type of feedstock in the calculation of S/C or A/F. Consequently, the fuel cell device 10 may keep S/C and A/F within the permissible ranges, even if the supply rate of any given type of feedstock is difficult to maintain at the original set value.

In the fuel cell device 10, if the difference between the first value and the second value of the one type of feedstock is at or above a threshold and the first value is less than the second value, the control device 13 is configured to change the set value for the one type of feedstock to the first value. The fuel cell device 10 is assumed to normally perform rated operation. Therefore, if the supply rate of one type of feedstock is difficult to maintain at the set value, maintaining the other type of feedstock in the calculation of S/C or A/F at the set value may be difficult. To handle such an event, the control device 13 is configured to add, to the condition on changing the set value, the stipulation that the detected first value is the second value, or in other words, the set value. This limits operation to situations in which S/C and A/F are kept within the permissible ranges more easily. Consequently, the fuel cell device 10 has a higher likelihood of exhibiting the effect of keeping S/C and A/F within the permissible ranges.

In the fuel cell device 10, the control device 13 is configured to change the set value for the other type of feedstock to a value based on the first value and the set value currently set as the at least one ratio that is outside the permissible range. With such a configuration, the fuel cell device 10 has an even higher likelihood of keeping S/C and A/F within the permissible ranges.

In the fuel cell device 10, the control device 13 is configured to determine the set value for each type of feedstock to be a value that exists in a prescribed correspondence relation with a set value for a demanded power output, change the set value for one of two types of feedstocks to the first value, subsequently change the third value defined as the set value for the power output to the fourth value calculated by multiplying the third value by a coefficient, the coefficient being obtained by dividing the first value by the second value, and change the set value for the other type of feedstock on the basis of the fourth value and the prescribed correspondence relation. Changing the supply rate of raw fuel and the supply rate of fuel, which depends on the supply rate of raw fuel, causes the power output of the fuel cell 12 to change. Changing the supply rate of air or water to keep S/C and A/F within the permissible ranges produces a change in supply rate of raw fuel. To handle such an event, in the fuel cell device 10 the control device 13 is configured to calculate the power output in accordance with the suppliable amount of a type of feedstock whose supply rate is difficult to maintain at the set value, and changes the set value for the other type of feedstock according to the calculated power output. Consequently, the fuel cell device 10 may easily calculate the set value for a type of feedstock other than the type of feedstock whose supply rate is difficult to maintain at the set value by using the relation between the power output and the respective set values for the supply rate of each type of feedstock. This relation may also be used during normal operation.

In the fuel cell device 10, the control device 13 is configured such that the first ratio and the second ratio, which are calculated using set values for feedstocks determined according to the set value for the power output, match set values for the first ratio and the second ratio. With such a configuration, the fuel cell device 10 has an even higher likelihood of keeping S/C and A/F within the permissible ranges.

In the fuel cell device 10, after a prescribed time elapses from the change of the set value for the power output to the fourth value, the control device 13 is configured to revert the set value back to the third value. A change in the set value for the power output creates a surplus or a shortage in the power output. Therefore, after having controlled S/C and A/F to be within the permissible ranges by changing the power output setting, the fuel cell device 10 may again attempt to bring the power output closer to the original set value.

In the fuel cell device 10, after reverting the set value for the power output back to the third value, the control device 13 is configured to acquire the first value obtained by detecting the supply rate of each type of feedstock, calculate the first ratio and the second ratio on the basis of the first value for each, and stipulate the third value as an upper limit on the power output if the first ratio, the second ratio, or both are outside the permissible range. According to such a configuration, the fuel cell device 10 may attempt to bring the power output closer to the original set value and determine whether a return to normal operation is feasible. The fuel cell device 10 may further use the determination result as a basis for providing an operating condition for keeping S/C and A/F within the permissible ranges.

In the fuel cell device 10, after reverting the set value for the power output back to the third value, the control device 13 is configured to acquire the first value obtained by detecting the supply rate of each type of feedstock, calculate the first ratio and the second ratio on the basis of the first value for each, and stop operation is the first ratio, the second ratio, or both are outside the permissible range. Frequent changes to the set value for the power output and the set value for each type of feedstock are undesirable from the perspective of stable operation. Therefore, by stopping operation, the fuel cell device 10 configured as above may avoid a continuation of unstable operation.

In the fuel cell device 10, after changing the set value for the power output to the fourth value, the control device 13 is configured to acquire a new first value obtained by detecting the supply rate of each type of feedstock, and stop the fuel cell device 10 if the difference between the new first value of each type of feedstock and a value defined as the set value for each type of feedstock is at or above a threshold. In a situation where the supply rate of a type of feedstock cannot be maintained even after changing the set value to a value considered to be maintainable, some kind of problem may have occurred. For example, the first flow meter 14, the second flow meter 15, the third flow meter, the detection mechanism 17, the first adjustment mechanism 18, the second adjustment mechanism 19, and/or the third adjustment mechanism 20 may be faulty, a communication malfunction may have occurred between any of the above equipment and the control device 13, or a blockage may have developed in any of the first supply channel 23, the second supply channel 24, and the third supply channel 25. To handle such an event, the fuel cell device 10 configured as above may assess a faulty state and stop operation.

In an embodiment, (1) a fuel cell device is
a fuel cell device comprising a reformer configured to generate fuel through reforming using raw fuel and steam, a fuel cell configured to generate electricity using the fuel and air, and a control device configured to maintain, at set values, supply rates of feedstocks, including the fuel, the air, the raw fuel, and the steam, to be supplied to the reformer and the fuel cell, wherein
the control device is configured to:
   acquire a first value obtained by detecting the supply rate of each type of feedstock;
   calculate a first ratio and a second ratio based on each first value, the first ratio being the ratio of a number of moles of steam to a number of moles of carbon in the raw fuel, and the second ratio being the ratio of the supply rate of the fuel with respect to the air; and
   if at least one of the first ratio or the second ratio is outside a permissible range respectively defined for each ratio, and a difference between a second value, which is defined as the set value for one of two types of feedstocks used to calculate the at least one ratio, and the first value of the one of the two types of feedstocks is at or above a threshold, change the set value for the one of the two types of feedstocks to the first value and change the set value for the other of the two types of feedstocks.

(2) The fuel cell device according to (1), wherein
if the difference between the first value and the second value of the one type of feedstock is at or above a threshold and the first value is less than the second value, the control device is configured to change the set value for the one type of feedstock to the first value.

(3) The fuel cell device according to (1) or (2), wherein
the control device is configured to change the set value for the other type of feedstock to a value based on the first value and a set value currently set as the at least one ratio that is outside the permissible range.

(4) The fuel cell device according to (1) or (2), wherein
the control device is configured to:
in the fuel cell module, determine a set value for each type of feedstock so as to be a value in a prescribed correspondence relation with a set value for a demanded power output;
change the set value for the one of the two types of feedstocks to the first value, and subsequently change a third value defined as the set value for the power output to a fourth value calculated by multiplying the third value by a coefficient, the coefficient being obtained by dividing the first value by the second value; and
change the set value for the other type of feedstock based on the fourth value and the prescribed correspondence relation.

(5) The fuel cell device according to (4), wherein
the first ratio and the second ratio calculated using the set values for the feedstocks determined according to the set value for the power output match the set values for the first ratio and the second ratio.

(6) The fuel cell device according to (4) or (5), wherein
after a prescribed time elapses from the change of the set value for the power output to the fourth value, the control device is configured to revert the set value back to the third value.

(7) The fuel cell device according to (6), wherein
after reverting the set value for the power output back to the third value, the control device is configured to acquire the first value obtained by detecting the supply rate of each type of feedstock, calculate the first ratio and the second ratio based on the first value for each, and stipulate the third value as an upper limit on the power output if the first ratio, the second ratio, or both are outside the permissible range.

(8) The fuel cell device according to (6), wherein
after reverting the set value for the power output back to the third value, the control device is configured to acquire the first value obtained by detecting the supply rate of each type of feedstock, calculate the first ratio and the second ratio based on the first value for each, and stop the fuel cell module if the first ratio, the second ratio, or both are outside the permissible range.

(9) The fuel cell device according to (6), wherein
after changing the set value for the power output to the fourth value, the control device is configured to acquire a new first value obtained by detecting the supply rate of each type of feedstock, and stop the fuel cell module if the difference between the new first value of each type of feedstock and a value defined as the set value for each type of feedstock is at or above a threshold.

In an embodiment, (10) a control method is
a method for controlling a fuel cell device provided with a reformer configured to generate fuel through reforming using raw fuel and steam and a fuel cell configured to generate electricity using the fuel and air, the fuel cell device being controlled such that supply rates of feedstocks, including the fuel, the air, the raw fuel, and the steam, to be supplied to the reformer and the fuel cell are maintained at set values, the method comprising:
acquiring a first value obtained by detecting the supply rate of each type of feedstock;
calculating a first ratio and a second ratio based on each first value, the first ratio being the ratio of a number of moles of steam to a number of moles of carbon in the raw fuel to be supplied to the reformer, and the second ratio being the ratio of the supply rate of the fuel with respect to the air; and
if at least one of the first ratio or the second ratio is outside a permissible range respectively defined for each ratio, and a difference between a second value, which is defined as the set value for one of two types of feedstocks used to calculate the at least one ratio, and the first value of the one of the two types of feedstocks is at or above a threshold, changing the set value for the one of the two types of feedstocks to the first value and change the set value for the other of the two types of feedstocks.

The foregoing describes embodiments of the fuel cell device 10, but in the present disclosure, an embodiment may also be achieved as a method or program for implementing an apparatus, or as a storage medium (such as an optical disc, magneto-optical disc, CD-ROM, CD-R, CD-RW, magnetic tape, hard disk, or memory card, for example) in which a program is recorded.

An embodiment in the form of a program is not limited to an application program such as object code compiled by a compiler or program code to be executed by an interpreter, and may also be in a form such as a program module incorporated into an operating system. The program may or may not be configured so that all processing is performed solely in a CPU on a control board. The program may also be configured to be implemented, in part or in full, by another processing unit mounted on an expansion board or expansion unit added to the board as needed.

The drawings used to describe an embodiment according to the present disclosure are schematic. The dimensional proportions and the like of the drawings do not necessarily match the real proportions.

The foregoing description of embodiments according to the present disclosure is based on the drawings and examples, but note that a person skilled in the art could make various variations or revisions on the basis of the present disclosure. Consequently, it should be understood that these variations or revisions are included in the scope of the present disclosure. For example, the functions and the like included in each component and the like may be rearranged in logically non-contradictory ways. A plurality of components or the like can be combined into one, or a single component can be divided.

In the present disclosure, all constituent features described herein and/or all methods or all steps of processes disclosed herein can be combined in any combinations, except for combinations in which these features would be mutually exclusive. Each of the features described in the present disclosure can be replaced by alternative features that work for the same, equivalent, or similar purposes, unless explicitly denied. Therefore, unless explicitly denied, each of the disclosed features is merely one example of a comprehensive series of same or equivalent features.

An embodiment according to the present disclosure is not limited to any of the specific configurations of the embodiments described above. In the present disclosure, embodiments can be extended to all novel features described herein or combinations thereof, or to all novel methods or processing steps described herein or combinations thereof.

In the present disclosure, qualifiers such as "first" and "second" are identifiers for distinguishing configurations. The numerals denoting the configurations distinguished by qualifiers such as "first" and "second" in the present disclosure are interchangeable. For example, the first flow meter can interchange the identifiers "first" and "second" with the second flow meter. The identifiers are interchanged at the same time. The configurations are still distinguished after the interchange of the identifiers. The identifiers may be removed. The configurations with the identifiers removed therefrom are distinguished by signs. The description of identifiers such as "first" and "second" in the present disclosure shall not be used as a basis for interpreting the order of the configurations or the existence of identifiers with smaller numbers.

### REFERENCE SIGNS

- 10: fuel cell device
- 11: reformer
- 12: fuel cell
- 13: control device
- 14: first flow meter
- 15: second flow meter
- 16: third flow meter
- 17: detection mechanism
- 18: first adjustment mechanism
- 19: second adjustment mechanism
- 20: third adjustment mechanism
- 21: storage
- 22: burner
- 23: first supply channel
- 24: second supply channel
- 25: third supply channel
- 26: fuel cell module

## Claims

1. A fuel cell device comprising a reformer configured to generate fuel through reforming using raw fuel and steam, a fuel cell configured to generate electricity using the fuel and air, and a control device configured to maintain, at set values, supply rates of feedstocks, including the fuel, the air, the raw fuel, and the steam, to be supplied to the reformer and the fuel cell, wherein
the control device is configured to:
acquire a first value obtained by detecting the supply rate of each type of feedstock;
calculate a first ratio and a second ratio based on each first value, the first ratio being the ratio of a number of moles of steam to a number of moles of carbon in the raw fuel, and the second ratio being the ratio of the supply rate of the fuel with respect to the air; and
if at least one of the first ratio or the second ratio is outside a permissible range respectively defined for each ratio, and a difference between a second value, which is defined as the set value for one of two types of feedstocks used to calculate the at least one ratio, and the first value of the one of the two types of feedstocks is at or above a threshold, change the set value for the one of the two types of feedstocks to the first value and change the set value for the other of the two types of feedstocks.

2. The fuel cell device according to claim 1, wherein
if the difference between the first value and the second value of the one type of feedstock is at or above a threshold and the first value is less than the second value, the control device is configured to change the set value for the one type of feedstock to the first value.

3. The fuel cell device according to claim 1 or 2, wherein
the control device is configured to change the set value for the other type of feedstock to a value based on the first value and a set value currently set as the at least one ratio that is outside the permissible range.

4. The fuel cell device according to claim 1 or 2, wherein
the control device is configured to:
determine a set value for each type of feedstock so as to be a value in a prescribed correspondence relation with a set value for a demanded power output;
change the set value for the one of the two types of feedstocks to the first value, and subsequently change a third value defined as the set value for the power output to a fourth value calculated by multiplying the third value by a coefficient, the coefficient being obtained by dividing the first value by the second value; and
change the set value for the other type of feedstock based on the fourth value and the prescribed correspondence relation.

5. The fuel cell device according to claim 4, wherein
the first ratio and the second ratio calculated using the set values for the feedstocks determined according to the set value for the power output match the set values for the first ratio and the second ratio.

6. The fuel cell device according to claim 4 or 5, wherein
after a prescribed time elapses from the change of the set value for the power output to the fourth value, the control device is configured to revert the set value back to the third value.

7. The fuel cell device according to claim 6, wherein
after reverting the set value for the power output back to the third value, the control device is configured to acquire the first value obtained by detecting the supply rate of each type of feedstock, calculate the first ratio and the second ratio based on the first value for each, and stipulate the third value as an upper limit on the power output if the first ratio, the second ratio, or both are outside the permissible range.

8. The fuel cell device according to claim 6, wherein
after reverting the set value for the power output back to the third value, the control device is configured to acquire the first value obtained by detecting the supply rate of each type of feedstock, calculate the first ratio and the second ratio based on the first value for each, and stop the fuel cell module if the first ratio, the second ratio, or both are outside the permissible range.

9. The fuel cell device according to claim 6, wherein
after changing the set value for the power output to the fourth value, the control device is configured to acquire a new first value obtained by detecting the supply rate of each type of feedstock, and stop the fuel cell module if the difference between the new first value of each type of feedstock and a value defined as the set value for each type of feedstock is at or above a threshold.

10. A method for controlling a fuel cell device provided with a reformer configured to generate fuel through reforming using raw fuel and steam and a fuel cell configured to generate electricity using the fuel and air, the fuel cell device being controlled such that supply rates of feedstocks, including the fuel, the air, the raw fuel, and the steam, to be supplied to the reformer and the fuel cell are maintained at set values, the method comprising:
acquiring a first value obtained by detecting the supply rate of each type of feedstock;
calculating a first ratio and a second ratio based on each first value, the first ratio being the ratio of a number of moles of steam to a number of moles of carbon in the raw fuel to be supplied to the reformer, and the second ratio being the ratio of the supply rate of the fuel with respect to the air; and
if at least one of the first ratio or the second ratio is outside a permissible range respectively defined for each ratio, and a difference between a second value, which is defined as the set value for one of two types of feedstocks used to calculate the at least one ratio, and the first value of the one of the two types of feedstocks is at or above a threshold, changing the set value for the one of the two types of feedstocks to the first value and changing the set value for the other of the two types of feedstocks.
